# EUROPÄISCHE PATENTSCHRIFT

(11) **EP 0 971 973 B1**
(45) Veröffentlichungstag und Bekanntmachung des Hinweises auf die Patenterteilung: **24.10.2001**
(21) Anmeldenummer: 98916985.9
(22) Anmeldetag: 18.03.1998
(51) Int. Cl.: C08J 3/09, C08L 61/28

(54) **LÖSUNGEN VON AMINOTRIAZINHARZEN IN MONOALKYLOGLYCOLEN**
SOLUTIONS OF AMINOTRIAZINE RESINS IN MONOALKYLGLYCOLS
SOLUTIONS DE RESINES D'AMINOTRIAZINE DANS DES MONOALKYLGLYCOLS

(30) Priorität: 04.04.1997 DE 19714015
(43) Veröffentlichungstag der Anmeldung: 19.01.2000
(73) Patentinhaber: BASF AKTIENGESELLSCHAFT, 67056 Ludwigshafen (DE)
(72) Erfinder: WEISS, Wolfram, D-67112 Mutterstadt (DE); FISCHER, Gerhard, D-67246 Dirmstein (DE); NIESSNER, Manfred, D-67105 Schifferstadt (DE); SCHNURR, Werner, D-67273 Herxheim (DE)
(86) Internationale Anmeldenummer: EP9801551
(87) Internationale Veröffentlichungsnummer: WO9845354

(56) Entgegenhaltungen:
- DE-A- 2 414 426
- DE-A- 4 426 186
- DE-A- 4 437 535

## Beschreibung

Die Erfindung betrifft die Verwendung von Lösungen von Aminotriazinharzen, deren Alkylolgruppen zu mindestens 30 mol% mit n-Butanol verethert sind, in einem Mono-C₁-C₄ alkylglykol der Formel

R¹-O-(R²-O-)_{w} (R³-O-)ₓ (R²-O-)_{y} (R³-O-)_{z} H. I

worin R¹ für C₁-C₄ Alkyl, R₂ für CH₂-CH₂ und R³ für 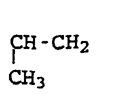 stehen und w, x, y, z für eine ganze Zahl von 0 bis 10 stehen, wobei mindestens eine der Variablen w, x, y, z ungleich 0 ist,
oder in einem Lösemittelgemisch, welches zu mindesten 20 Gew.-% aus einem Mono-C₁-C₄ alkylglykol der vorstehenden Formel besteht, als Härtungsmittel in Beschichtungsmitteln.

Aminoharze werden bekannterweise als Härtungsmittel für polymere Bindemittel, insbesondere für solche mit Hydroxylgruppen verwendet. Die Aminoharze liegen dabei im allgemeinen als Lösung vor.

Aus DE-A-2414426 und DE-A-2824473 sind Melaminharze bekannt, bei denen die Alkylolgruppen mit einem Monoalkylglykol verethert sind. Überschüssiges Monoalkylglykol wird destillativ aus der Lösung der Melaminharze entfernt.

DE-A-4437535 offenbart die Verwendung eines Methanol-veretherten Melaminharzes in Beschichtungsmitteln.

Gewünscht ist generell, daß die als Härtungsmittel verwendeten Lösungen der Aminoharze die Viskosität, vor allem von wäßrigen Beschichtungsmitteln, nicht zu stark erhöhen. Gleichzeitig soll in wäßrigen Beschichtungsmitteln der Anteil von flüchtigen organischen Lösemitteln naturgemäß möglichst gering sein.

Gewünscht sind daher Lösungen von Aminoharzen welche bei Zugabe zu wäßrigen Beschichtungsmitteln die Viskosität und den Gehalt an flüchtigen organischen Lösemitteln kaum erhöhen.

Demgemäß wurden die oben definierte Verwendung gefunden.

Bei dem Aminotriazinharz, welches Bestandteil der Lösung ist, handelt es sich um ein Reaktionsprodukt von Aldehyden, z.B. Glyoxal, Furfurol und vorzugsweise Formaldehyd mit Aminotriazinen, z.B. Benzoguanamin, Acetoguanamin und vorzugsweise Melamin.

Besonders bevorzugt sind Reaktionsprodukte von Melamin und Formaldehyd.

Die Aminogruppen der Aminotriazine wurden bei der Umsetzung mit Aldehyd, insbesondere Formaldehyd, alkyloliert, insbesondere methyloliert, d.h. die Wasserstoffatome der Aminogruppen werden durch Alkylolgruppen ersetzt. Vorzugsweise sind mehr als 30 %, insbesondere mehr als 50 % der Wasserstoffatome durch Alkylolgruppen ersetzt. Die Aminotriazinharze können, z.B. durch Kondensationsreaktionen der Alkylolgruppen, mehrere Aminotriazinringe enthalten. Bevorzugt enthalten sie im Mittel 1 bis 20 Aminotriazinringe.

Die übrigen Alkylolgruppen sind vorzugsweise weitgehend oder vollständig mit C₁- bis C₁₆-Alkanolen verethert. Vorzugsweise handelt es sich dabei um Butanol oder Gemische von Methanol und Butanol, mit überwiegendem Anteil an Butanol. Insgesamt sind mindestens 30 mol%, vorzugsweise mindestens 50 mol% der ursprünglich (d.h. vor Veretherungsreaktionen und Kondensationsreaktionen vorhandenen) Alkylolgruppen mit C₁-C₁₆ Alkanolen verethert. Vorzugsweise sind maximal lediglich 5 mol%, insbesondere maximal 1 mol% (vorzugsweise keine) Alkylolgruppen mit andere Alkoholen verethert.

Die Aminoharze sind vorzugsweise wasserunlöslich.

Die Verdünnungszahl der Aminoharze ist vorzugsweise kleiner als 20 und besonders bevorzugt kleiner als 5 g insbesondere kleiner 2 oder 1 g. Die Verdünnungszahl ist ein Maß dafür, wieviel hydrophile Lösemittel einem Aminoharz zugemischt werden können, ohne daß die erhaltene Lösung trüb wird.

Die Verdünnungszahl wird durch folgendes Verfahren bestimmt:

1 g Aminoharz werden in ein 25 ml Reagenzglas gegeben. Daraufhin wird bei 23°C Wasser in 0,5 g-Portionen zugegeben. Nach jeder Zugabe wird geschüttelt und beobachtet, ob nach dem Schütteln eine Trübung oder Phasenseparation (Unverträglichkeit) verbleibt. Die zugegebene Wassermenge in g nachdem eine Unverträglichkeit auftritt ist die Verdünnungszahl.

Die Aminotriazinharze sind in einem organischen Lösungsmittel gelöst. Bei dem Lösungsmittel handelt es sich um ein Mono-C₁-C₄ alkylglykol der Formel I, bzw. ein Gemisch dieser Verbindungen, oder um ein Lösungsmittelgemisch, welches zu mindestens 20 Gew.-%, vorzugsweise mindestens 50 Gew.-%, besonders bevorzugt zu mindestens 70 Gew.-%, bezogen auf das Lösungsmittelgemisch aus den Mono-C₁-C₄ alkylglykolen der Formel I besteht.

In der Formel I steht R¹ vorzugsweise für n-Butyl. Die Summe aus w+x+y+z beträgt vorzugsweise 1 bis 10, besonders bevorzugt 1 bis 5 und ganz besonders bevorzugt 1 bis 3. Die Verbindung der Formel I kann als Alkylenoxidgruppen ausschließlich Ethylenoxidgruppen (R²-O) oder Propylenoxidgruppen (R³-O) enthalten. Es kann sich aber auch um Copolymere
mit w,x ≠ O und y, z =O oder
x,y ≠ O und w, z =O oder
w,x,y ≠ O und z =O oder
x,y,z ≠ O und w =O
handeln.

Bevorzugt ist w ≠ O und x, y, z = o.

Bevorzugte Verbindungen sind z. B.
Butylglykol (R¹ = Butyl; w = 1; x, y, z = 0)
Butyldi-, tri- oder tetraglykol (R¹ = Butyl, w = 2, 3 oder 4, x, y, z = 0)
Propylenglykolmonomethylether (R¹ = Methyl, x = 1, w, y, z = 0)
Dipropylenglykolmonomethylether (R¹ = Methyl, x = 2, w, y, z = 0)
und besonders bevorzugt sind
Butylglykol und Butyldiglykol

Die Herstellung der Aminotriazinharze erfolgt im allgemeinen in einem organischen Lösemittel. Z.B. wird üblicherweise der Alkohol, mit dem die Alkylolgruppen verethert werden, im Überschuß eingesetzt und dient gleichzeitig als Lösemittel.

Zur Herstellung der Lösungen kann daher z.B. ein Lösemittelaustausch vorgenommen werden, wobei das ursprüngliche Lösemittel im gewünschten Ausmaß entfernt wird und Mono-C₁-C₄ alkylglykole im gewünschten Ausmaß zugesetzt werden.

Die Lösung eignet sich als Härtungsmittel in Beschichtungsmitteln.

Beschichtungsmittel enthalten ein polymeres Bindemittel und gegebenenfalls weitere Additive, wie Pigmente, Farbstoffe, Verlaufsmittel, Verdicker etc.

Das polymere Bindemittel ist durch einen Gehalt an aktiven Wasserstoffatomen (OH-, NH-, SH-Gruppen) mit Aminoharzen vernetzbar, d.h. härtbar.

Als Bindemittel geeignet sind z.B. Alkydharze, Polyesterharze, Epoxiharze, Polyurethanharze, radikalische Polymersisate auf Basis von Acrylaten, Vinylestern, Dienen und Vinylaromaten oder deren Gemische.

Bevorzugt sind radikalische Polymerisate, Polykondensate oder Polyaddukte mit OH-Gruppen, vorzugsweise mit einer Hydroxylzahl von 20 bis 200 mg KOH/g Substanz (nach DIN 53240).

Die Bindemittel und somit auch die Beschichtungsmittel können z.B. in Form von Lösungen in Wasser oder organischen Lösungsmittel oder in Form wäßriger Dispersionen vorliegen.

Die Lösungen eignen sich als Härtungsmittel sowohl für wäßrige Beschichtungsmittel als auch für in organischen Lösungsmitteln vorliegende Beschichtungsmittel.

Bei der Verwendung in wäßrigen Beschichtungsmitteln ist allenfalls nur ein geringer Anstieg der Viskosität festzustellen.

Der folgende Vergleich macht deutlich, daß der Zusatz eines erfindungsgemäß verdünnten Melaminharzes bei gleichem Gehalt an flüchtigen organischen Lösemitteln zu einer niedrigeren Viskosität des Lacks führt.

### Beispiele

### Aminoharze

### A1 (zum Vergleich)

Luwipal® LR 8891 (butyliertes, teilalkyliertes Melaminharz in n-Butanol, Feststoffgehalt 70 %)

### A2

Aus 1000 g Luwipal® LR 8891 werden unter Vakuum (50 mbar) 250 ml Butanol abdestilliert. Das erhaltene Harz wird anschließend mit 170 g Butylglykol auf eine Viskosität von ca. 4500 mPa·s eingestellt. Danach wird der Ansatz filtriert. Das Endprodukt weist einen Feststoffgehalt von 70 % (ISO 3251 2 h/125°C 2 ml n-Butanol) bei einer Viskosität von 4,8 mPa·s (ISO 3219/B) und einem Butylglykolanteil von 18 % auf.

### Lacke:

### Beispiel 1

In einem 150 ml-Polyethylenbecher werden 45 g einer 55 %igen Polyesterharzlösung in 16,5 % Butylglykol, 6,8 % Isobutanol, 18 % Wasser und 3,7 % Dimethylethanolamin (Bayhydrol® D 155) mit einem Hydroxylgruppengehalt (lösemittelfrei) von 1,5 % und einer Säurezahl (lösemittelfrei) von 42 mg KOH/G mit 15 g der 70 %igen Melaminharzlösung A2 gemischt und anschließend unter Rühren mit 57 g Wasser in eine Emulsion überführt. Dabei wird ein Laborrührer mit einer Dissolverscheibe verwendet. Die Umdrehungszahl beträgt 500 - 1000 U/min. Es resultiert ein 30 %iger wäßriger Polyesterlack mit einem pH-Wert (Glaselektrode) von 7,9 und einer Viskosität (Brookfield, Spindel 3, 10 U/min) von 1,9 Pas bei 23°C.

### Vergleich

Es wird wie im Beispiel verfahren. Anstelle der 70 %igen Melaminharzlösung A2 wird die rein butanolgelöste, 70 %ige Melaminharzlösung A1 verwendet.
Der resultierende 30 %ige, wäßrige Polyesterlack hat bei einem pH-Wert von 8,2 eine Viskosität von 5,6 Pas.

## Patentansprüche

1. Verwendung von Lösungen von Aminotriazinharzen, deren Alkylolgruppen zu mindestens 30 mol% mit n-Butanol verethert sind, in einem Mono-C₁-C₄ alkylglykol der Formel
R¹-O-(R²-O-)_{w} (R³-O-)ₓ (R²-O-)_{y} (R³-O-)_{z} H. I
worin R¹ für C₁-C₄ Alkyl, R₂ für CH₂-CH₂ und R³ für 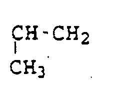 stehen und w, x, y, z für eine ganze Zahl von 0 bis 10 stehen, wobei mindestens eine der Variablen w, x, y, z ungleich 0 ist,
oder in einem Lösemittelgemisch, welches zu mindestens 20 Gew.-% aus einem Mono-C₁-C₄ alkylglykol der vorstehenden Formel besteht,
als Härtungsmittel in Beschichtungsmitteln.

2. Verwendung der Lösungen gemäß Anspruch 1 als Härtungsmittel in wäßrigen Beschichtungsmitteln.

3. Verfahren zur Herstellung von härtbaren Beschichtungsmitteln, **dadurch gekennzeichnet, daß** Beschichtungsmitteln eine Lösung gemäß Anspruch 1 zugesetzt wird.

4. Beschichtungsmittel, erhältlich durch ein Verfahren gemäß Anspruch 3.

## Claims

1. The use of a solution of aminotriazine resins at least 30 mol% of whose alkylol groups are etherified with n-butanol in a mono-C₁-C₄ alkyl glycol of the formula
R¹-O-(R²-O-)_{w} (R³-O-)ₓ (R²-O-)_{y} (R³-O-)_{z} H. I
where R¹ is C₁-C₄ alkyl, R₂ is CH₂-CH₂ and R³ is 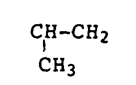 and w, x, y and z are an integer from 0 to 10 and at least one of them is other than 0,
or in a solvent mixture which consists to the extent of at least 20% by weight of a mono-C₁-C₄ alkyl glycol of the above formula,
as a curing agent in coating compositions.

2. The use of a solution as claimed in claim 1 as a curing agent in aqueous coating compositions.

3. A process for preparing curable coating compositions, which comprises adding a solution as claimed in claim 1 to coating compositions.

4. A coating composition obtainable by a process as claimed in claim 3.

## Revendications

1. Utilisation de solutions de résines d'aminotriazine, dont les groupes alkylol sont, pour au moins 30 moles %, éthérifiés par du n-butanol, dans un mono-C₁-C₄-alkylglycol de la formule :
R¹-O-(R²-O-)_{w} (R³-O-)ₓ (R²-O-)_{y} (R³-O-)_{z} H (I)
dans laquelle R¹ représente un groupe alkyle en C₁-C₄, R² représente CH₂-CH₂ et R³ représente 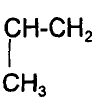 et w, x, y et z représentent un nombre entier de 0 à 10, au moins une des variables w, x, y et z étant différente de 0,
ou dans un mélange de solvants qui est constitué pour au moins 20% en poids d'un mono-C₁-C₄-alkylglycol de la formule précédente,
comme agents de durcissement dans des produits de revêtement.

2. Utilisation des solutions suivant la revendication 1, comme agents de durcissement dans des produits de revêtement aqueux.

3. Procédé de préparation de produits de revêtement durcissables, **caractérisé en qu'**à des produits de revêtement, on ajoute une solution suivant la revendication 1.

4. Produits de revêtement, que l'on peut obtenir par un procédé suivant la revendication 3.
